# EUROPÄISCHE PATENTSCHRIFT

(11) **EP 1 996 499 B1**
(45) Veröffentlichungstag und Bekanntmachung des Hinweises auf die Patenterteilung: **17.10.2012**
(21) Anmeldenummer: 07722049.9
(22) Anmeldetag: 09.03.2007
(51) Int. Cl.: B65H 26/00, B65H 23/182

(54) **VERFAHREN ZUR DETEKTION VON PLANLAGEABWEICHUNGEN BEI DER ABROLLUNG FLEXIBER, BAHNFÖRMIGER FLACHFORMGÜTER**
METHOD FOR DETECTING PLANAR DEVIATIONS DURING THE UNWINDING OF FLEXIBLE, WEB-TYPE FLAT GOODS
PROCÉDÉ DE DÉTECTION DE DÉFAUT DE PLANÉITÉ LORS DU DÉROULEMENT DE PRODUITS PLATS ET SOUPLES EN FORME DE BANDE

(30) Priorität: 20.03.2006 DE 102006014506
(43) Veröffentlichungstag der Anmeldung: 03.12.2008
(73) Patentinhaber: Fraunhofer-Gesellschaft zur Förderung der angewandten Forschung e.V., 80686 München (DE); Gesellschaft für Verpackungstechnik und -Logistik mbH, 01189 Dresden (DE)
(72) Erfinder: HUSNER, Andreas, 01279 Dresden (DE); DRUT, Henry, 01127 Dresden (DE); NITSCHE, Tobias, 01187 Dresden (DE)
(86) Internationale Anmeldenummer: PCT/DE2007/000478
(87) Internationale Veröffentlichungsnummer: WO 2007/107147

(56) Entgegenhaltungen:
- WO-A-00/36402
- WO-A-95/18762
- WO-A-2005/097646
- DE-A1- 2 044 725
- DE-A1- 3 831 944
- US-A- 3 125 265
- US-A- 5 279 472

## Beschreibung

Die Erfindung betrifft ein Verfahren zur Detektion der Planlageabweichung von flexiblen, bahnförmigen Flachformgütern, wie dies beispielsweise Folien aus unterschiedlichen Werkstoffen sein können, die auch als Packstoff einsetzbar sind. Die Flachformgüter werden in gewickelter Form vorgehalten und von einer Rolle für eine Weiterverarbeitung oder Weiterbehandlung abgerollt.

Dabei treten Planlageabweichungen von Flachformgut durch Dickenunterschiede im Werkstoff auf. Die dadurch bewirkte ungleichmäßige Belastung des Flachformgutes beim Aufwickeln infolge der Wickelspannung kann unter Berücksichtigung des zeitlichen Einflusses (Lagerung des aufgewickelten Flachformgutes) insbesondere bei viskoelastischen Werkstoffen, z.B. Kunststofffolien und weichen Aluminiumfolien zum "Fließen" des Flachformgutes führen.

Abweichungen von Vorgaben können nachfolgend an ein Abrollen des Flachformgutes zu unerwünschten Beeinträchtigungen führen. So können Störungen bei der Weiterverarbeitung des Flachformgutes auftreten, die zumindest Ausfallzeiten einer entsprechenden Anlagentechnik hervorrufen.

Wird Flachformgut als Packstoff eingesetzt treten weitere Verluste dadurch auf, dass die verpackten Stoffe in der Regel im Nachgang zu einer Havarie nicht mehr verwendet werden dürfen.

Es ist daher gewünscht solche Fehler oder Mängel rechtzeitig erkennen zu können, um resultierende Verluste und Zeitausfall zumindest reduzieren zu können.

Um diese Probleme anzugehen wurde von O. Becht und C. Hoelger in "Erfolgversprechende Methode zur Messung von Trägerverzug"; Papier und Folien; 4. Ausgabe, April 2003; S. 25-27 vorgeschlagen eine lokale Auslenkung zu bestimmen. Hierzu werden Laserabstandssensoren in Kombination mit Luftdüsen eingesetzt. Mit den Luftdüsen wird eine Luftströmung unter einem bestimmten Druck auf eine Folie gerichtet. Diese Lösung ist aber aufwändig im Betrieb und erfordert auch entsprechende Investitionskosten. Außerdem kann die Bestimmung nur unter Berücksichtigung einer relativ hohen Zeitkonstante erfolgen, da ein solches System entsprechend Träge ist. Des Weiteren müssen bestimmte Abstände zwischen benachbarten Luftdüsen und Abstandssensoren eingehalten werden, so dass die erreichbare Ortsauflösung begrenzt ist.

Für etwas anders geartete Anwendungen sind optische Messsysteme bekannt.

So wird in WO 00/36402 A1 vorgeschlagen an einer Papiermaschine eine optische Abstandsmessanordnung einzusetzen.

Die in DE 695 33 012 T2 beschriebene Lösung betrifft eine optische Überwachung bei der Papierherstellung, bei der die Oberfläche mit ortsfesten Bahnsensoren überwacht werden soll, um Einfluss auf die Qualität von hergestelltem Papier nehmen zu können. Als nächstliegender Stand der Tecknik wird die 45 5 279 472 A angesehen, die ein verfahren gemäss dem Oberbegriff des Anspruchs 1 offenbart.

Es ist daher Aufgabe der Erfindung Planlageabweichungen unmittelbar beim Abrollen eines flexiblen, bahn-' förmigen Flachformgutes von einer Rolle, berührungslos und mit geringem Aufwand zu erfassen.

Erfindungsgemäß wird diese Aufgabe mit einem Verfahren, das die Merkmale des Anspruchs 1 aufweist, gelöst. Vorteilhafte Ausgestaltungen und Ausbildungen der Erfindung können mit in den untergeordneten Ansprüchen bezeichneten Merkmalen erreicht werden.

Erfindungsgemäß wird dabei so vorgegangen, dass unmittelbar beim Abrollen des jeweiligen Flachformgutes von einer Ablaufkante deren Lage und/oder Ausrichtung mit mindestens einem optischen Detektor in Bezug zu einer parallel zur Rotationsachse ausgerichteten Ebene bestimmt wird.

Dabei ist die Ablaufkante unmittelbar am in diesem Moment von der Rolle abgewickelten Flachformgut und dem noch auf der Rolle gewickelten Flachformgut ausgebildet. Bei unerwünschten Planlageabweichungen kann sich die Lage der Ablaufkante, also der Abstand zu einer vorgegebenen Ebene, die parallel zur Rotationsachse der Rolle ausgerichtet ist, verändern. Allein oder zusätzlich kann sich aber auch die Ausrichtung der Ablaufkante in Bezug zu einer solchen Ebene verändern. Die Ablaufkante kann dabei in einem schräg geneigten Winkel zu dieser Ebene verkippen und trotzdem geradlinig verlaufen oder auch bogenförmig gekrümmt verlaufen, was zumindest teilweise an der Ablaufkante der Fall sein kann. So kann eine Ablaufkante konkav oder konvex gekrümmt verlaufen. Dies kann über die gesamte Breite des Flachformgutes der Fall aber auch nur in einem Teilbereich (beispielsweise in der Mitte) oder an den äußeren Rändern der Fall sein.

Übersteigt die erfasste Abweichung der Lage und/oder Ausrichtung der Ablaufkante ein vorgegebenes Maß kann dies als Fehler am Flachformgut oder ein Wicklungsfehler, der beim Aufwickeln des Flachformgutes auf die Rolle aufgetreten ist, interpretiert werden. In diesem Fall kann das Abrollen von Flachformgut von der Rolle gestoppt und dadurch ein größerer Schaden verhindert werden.

Es hat sich überraschend herausgestellt, dass die Ablaufkante optisch auch bei transparenten und/oder an der Oberfläche reflektierendem Flachformgut detektiert werden kann.

Die Ablaufkante kann bei der Erfindung über die gesamte Breite des von der Rolle abzurollenden Formflachgutes detektiert werden. Hierfür können als Beispiele für optische Detektoren CCD-Zeilen, CCD-Arrays oder Videokameras eingesetzt und entsprechend ihrer Eigenschaften angeordnet werden. So kann beispielsweise eine Videokamera mit ihrer optischen Achse in einem schräg geneigten Winkel von oben oder unten auf das abgerollte Formflachgut und außerdem parallel zur Rotationsachse der Rolle ausgerichtet sein. So ist es vorteilhaft möglich mit lediglich einer Videokamera eine Detektion an breitformatigem Formflachgut durchzuführen.

CCD-Zeilen oder auch Zeilen eines CCD-Arrays können parallel zur Rotationsachse der Rolle und außerdem so angeordnet sein, dass sie den Bereich in dem sich die Ablaufkante ohne Planlageabweichung befinden würde, erfassen können.

Optische Detektoren können orthogonal zur äußeren Mantelfläche des von der Rolle abgerollten Flachformgutes angeordnet sein.

Bei der Detektion können die Anzahl einzelner Detektionselemente (z.B. die einzelnen Pixel einer Videokamera) bestimmt werden, bei denen ein vorgegebener Schwellwert einer detektierten Intensität erreicht, über- oder unterschritten worden ist, bestimmt wird. Dies bestimmt sich nach der Art der optischen Detektion. In dieser Form kann bevorzugt eine von einer Vorgabe abweichende Ausrichtung der Ablaufkante erkannt werden, da mindestens ein Bereich der Ablaufkante außerhalb eines Detektionsbereichs des optischen Detektors angeordnet sein kann.

So oder auch in anderer geeigneter Form kann der Anteil der detektierten Ablaufkante, der innerhalb eines Detektionsbereichs angeordnet ist, ein Maß für die Auswertung sein. Liegen beispielsweise 20 % der Ablaufkante außerhalb eines Detektionsbereichs, kann dies ein Kriterium für ein erforderliches Reagieren sein.

Ein solcher Detektionsbereich sollte so gewählt sein, dass er von zwei in einem vorgebbaren Abstand zueinander angeordneten und parallel zur Rotationsachse der Rolle ausgerichteten Grenzlinien ausgebildet ist. Dies kann bei einer Videokamera, als optischer Detektor auch virtuell erreicht werden.

Für einen definierten Detektionsbereich kann aber auch eine optische Spaltblende zwischen Flachformgut und optischem Detektor angeordnet sein. Der Spalt kann eine konstante Breite über die gesamte Länge der Blende, also ein konstantes Spaltmaß, aufweisen.

Bei der Anordnung des Detektionsbereichs sollte die sukzessive Veränderung der Position einer Ablaufkante infolge der beim Abrollen zu verzeichnenden Verringerung des Außendurchmessers berücksichtigt werden.

Insbesondere bei einem sehr breiten von der Rolle abgerollten Flachformgut kann es vorteilhaft sein, die Detektion der Ablaufkante nicht vollständig und gleichzeitig, sondern sequentiell durchzuführen. So kann gleichzeitig lediglich ein Bereich der Ablaufkante erfasst und nachfolgend durch Umschaltung oder Neuausrichtung eines optischen Detektors ein anderer Bereich der Ablaufkante detektiert werden. So kann beispielsweise alternierend jeweils ein äußerer Rand der Ablaufkante detektiert werden, während der mittlere Bereich selten oder zu keinem Zeitpunkt Berücksichtigung findet.

Bei einer bestimmten Ausführungsform von Formflachgut, kann durch dessen Eigenschaften bedingt, aber auch eine Überwachung von Lage bzw. Ausrichtung der Ablaufkante in einem mittleren Bereich des abzurollenden Formflachgutes, also zwischen äußeren Rändern ausreichend sein. Dies ist insbesondere vorteilhaft, wenn ein solches Formflachgut bei einer Planlageabweichung zu einem gekrümmten Verlauf der Ablaufkante führt.

Mit der Erfindung kann außer der Lage und/oder Ausrichtung der Ablaufkante auch ein jeweiliger Längenverzug des abgerollten Formflachgutes unter Berücksichtigung der jeweils wirkenden Bahnkraft, beim Abziehen, dem E-Modul des Formflachgutes, des momentanen Außendurchmessers der Rolle mit noch aufgewickeltem Formflachgut sowie dem Abstand zu einer nachfolgend angeordneten Umlenkrolle bestimmt werden. Dies kann beispielsweise bei einer nachfolgenden Bedruckung des Formflachgutes berücksichtigt und solche Fehler bei der Anordnung von Druckbildern kompensiert werden.

Mit optischen Detektoren können die Lage und/oder Ausrichtung einer Ablaufkante direkt detektiert werden. Für einige Anlagen oder Arten von Formflachgut kann dies aber auch mit einer projizierten optischen Abbildung oder eines Schattens der Ablaufkante erreicht werden, indem die Projektion oder der Schatten optisch detektiert wird.

Mit der Erfindung ist es möglich unmittelbar, also auch zeitgleich beim Abrollen von Formflachgut eine ggf. aufgetretene Planlageabweichung qualitativ und quantitativ zu bestimmen. So kann eine Qualitätsbeurteilung eines Formflachgutes oder der Aufwicklung von Formflachgut auf eine Rolle erreicht werden, die aussagekräftig ist. Im Idealfall ist eine Ablaufkante geradlinig und parallel zur Rotationsachse der Rolle ausgerichtet.

Es können mit der Erfindung die tatsächlichen im Moment auftretenden Längenverhältnisse des abgerollten Formflachgutes bestimmt werden. Die Bestimmung erfolgt kontakt- und berührungslos. Es wird außer der Bahnkraft, die zum Abrollen aber erforderlich ist, keine weitere Kraft auf das jeweilige Formflachgut ausgeübt.

Nachfolgend soll die Erfindung lediglich beispielhaft näher erläutert werden.

Dabei zeigen:
Figur 1 in schematischer Form eine ideal ausgebildete Ablaufkante an von einer Rolle abgerolltem Formflachgut und
Figur 2 in schematischer Form eine möglich Anordnung zur Bestimmung der Planlageabweichung bei von einer Rolle abgerolltem Formflachgut.

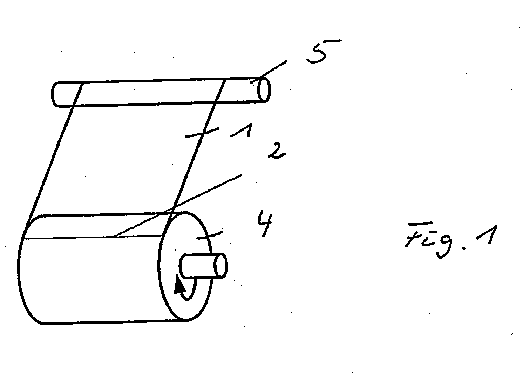

In Figur 1 ist in schematischer Form gezeigt, wie eine ideale, nämlich geradlinig und parallel zur Rotationsachse einer Rolle 4 ausgerichtete Ablaufkante 2 beim Abrollen einer Kunststofffolie, als Formflachgut 1 ausgebildet sein kann und so ein Zustand ohne Planlageabweichung des Formflachgutes 1 beim Abrollen von der Rolle 4 zu verzeichnen ist. Das Formflachgut 1 wird über eine nachfolgend angeordnete Umlenkrolle 5 weiter transportiert.

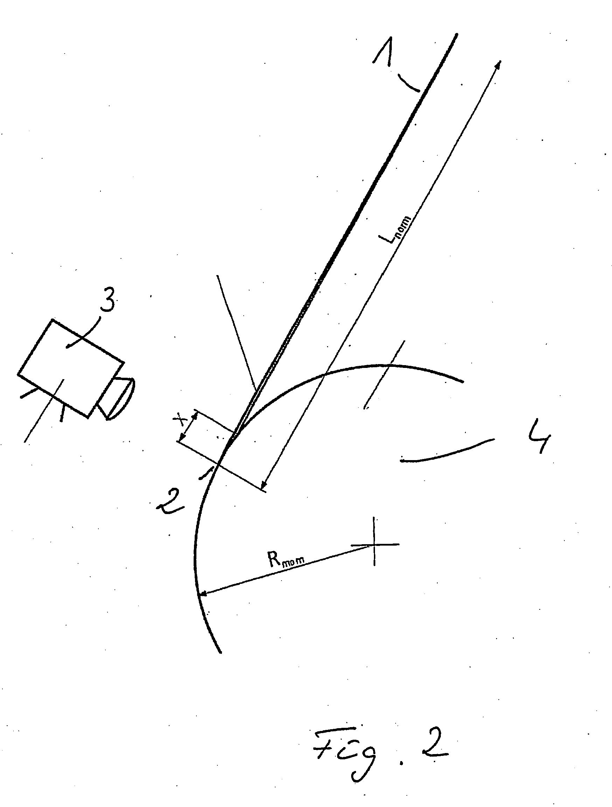

Mit Figur 2 soll ebenfalls in schematischer Form und von einer Seite betrachtet, ein Idealfall bzw. ein Zustand mit tolerabler Planlageabweichung und ein Zustand bei dem eine nicht tolerable, von einer Vorgabe abweichende Planlageabweichung aufgetreten und detektierbar ist, verdeutlicht werden.

Hierbei ist eine Videokamera, als optischer Detektor 3 auf einen Oberflächenbereich der abzurollenden Kunststofffolie, als Formflachgut 1 am äußeren Durchmesser, zur Detektion der Lage und/oder Ausrichtung der Ablaufkante, gerichtet. Sie kann, wie aus Figur 2 erkennbar, orthogonal zur äußeren Mantelfläche des von der Rolle 4 abzurollenden Flachformgutes 1 dabei angeordnet und auf diese ausgerichtet sein.

Dabei sind zwei Zustände dargestellt. In einem Zustand ohne unzulässige Planlageabweichung ist die Ablaufkante 2 in einer bestimmten Position angeordnet und mit nicht von der parallelen abweichender Ausrichtung ausgebildet.

Im zweiten Zustand hat sich die Position der Ablaufkante 2 verschoben und ist im Abstand X zur vorgegebenen Position mit Lₙₒᵣₘ unter Berücksichtigung des normierten Außendurchmessers bzw. Radius Rₙₒᵣₘ angeordnet. Dieser Abstand X kann bestimmt und so eine unerwünschte Planlageabweichung erkannt werden.

## Patentansprüche

1. Verfahren zur Detektion von Planlageabweichungen bei der Abrollung flexibler, bahnförmiger Flachformgüter von einer Rolle auf der Flachformgut in gewickelter Form vorgehalten ist, bei dem mit mindestens einem optischen Detektor (3) über mindestens einen Bereich der Breite des Flachformgutes (1) beim Abrollen die Lage und/oder Ausrichtung einer ausgebildeten Ablaufkante (2) in Bezug zu einer parallel zur Rotationsachse der Rolle (4) ausgerichteten Ebene bestimmt wird.

2. Verfahren nach Anspruch 1, **dadurch gekennzeichnet, dass** die Lage und/oder Ausrichtung der Ablaufkante (2) über die gesamte Breite des Flachformgutes (1) gleichzeitig bestimmt wird.

3. Verfahren nach Anspruch 1 oder 2, **dadurch gekennzeichnet, dass** die Lage und/oder Ausrichtung der Ablaufkante (2) mit einer CCD-Zeile, einem CCD-Array oder einer Videokamera, als optischer Detektor (3) bestimmt wird.

4. Verfahren nach einem der vorhergehenden Ansprüche, **dadurch gekennzeichnet, dass** die Anzahl einzelner Detektionselemente des optischen Detektors (3), die einen vorgebbaren Schwellwert einer detektierten Intensität erfassen, zur Bestimmung der Ausrichtung der Ablaufkante (2) ermittelt werden.

5. Verfahren nach einem der vorhergehenden Ansprüche, **dadurch gekennzeichnet, dass** die Detektion mit einem oder mehreren optischen Detektor(en) (3), die orthogonal zur äußeren Mantelfläche des von der Rolle (4) abgerollten Flachformgutes (1) angeordnet ist/sind, durchgeführt wird.

6. Verfahren nach einem der vorhergehenden Ansprüche, **dadurch gekennzeichnet, dass** die Bestimmung innerhalb eines Detektionsbereiches mit zwei in einem vorgebbaren Abstand zueinander und parallel zur Rotationsachse ausgerichteten Grenzlinien durchgeführt wird.

7. Verfahren nach einem der vorhergehenden Ansprüche, **dadurch gekennzeichnet, dass** mit dem optischen Detektor (3) ein vorgebbarer Anteil der Ablaufkante (2) innerhalb des Detektionsbereiches erfasst und als Bewertungskriterium genutzt wird.

8. Verfahren nach einem der vorhergehenden Ansprüche, **dadurch gekennzeichnet, dass** die Lage des Detektionsbereiches in Abhängigkeit des äußeren Durchmessers mit aufgewickeltem Flachformgut (1) verändert und diesem angepasst wird.

9. Verfahren nach einem der vorhergehenden Ansprüche, dass zur Vorgabe des Detektionsbereiches eine optische Schlitzblende verwendet wird, die zwischen Ablaufkante (2) und optischem Detektor (3) angeordnet ist.

10. Verfahren nach einem der vorhergehenden Ansprüche, **dadurch gekennzeichnet, dass** die Bestimmung der Lage und/oder Ausrichtung der Ablaufkante (2) sequentiell über Bereiche der Breite des abgerollten Flachformgutes (1) durchgeführt wird.

11. Verfahren nach einem der vorhergehenden Ansprüche, **dadurch gekennzeichnet, dass** ein Längenverzug des Flachformgutes (1) unter Berücksichtigung der wirkenden Bahnkraft, dem E-Modul des Flachformgutes, dem momentanen Außendurchmesser und dem Abstand zu einer nachfolgenden Umlenkrolle (5) bestimmt wird.

12. Verfahren nach einem der vorhergehenden Ansprüche, **dadurch gekennzeichnet, dass** die Lage und/oder Ausrichtung der Ablaufkante (2) mittels einer projizierten optischen Abbildung oder des Schattens der Ablaufkante (2) bestimmt wird.

## Claims

1. Method for detecting planar deviations during the unwinding of flexible flat goods in web form from a roll, on which flat goods are stored in rolled form, in which the position and/or orientation of a configured run-off edge (2) in relation to a plane oriented parallel to the rotational axis of the roll (4) is determined over at least one region of the width of the flat goods (1) with at least one optical detector (3) during unwinding.

2. Method according to claim 1, **characterised in that** the position and/or the orientation of the run-off edge (2) is determined over the entire width of the flat goods (1) at the same time.

3. Method according to claim 1 or 2, **characterised in that** the position and/or orientation of the run-off edge (2) is determined with a CCD line, a CCD array or a video camera as optical detector (3).

4. Method according to one of the preceding claims, **characterised in that** the number of individual detection elements of the optical detector (3), which detect a predeterminable threshold value of a detected intensity, are determined for determination of the orientation of the run-off edge (2).

5. Method according to one of the preceding claims, **characterised in that** the detection is conducted with one or more optical detectors (3), which is/are arranged orthogonally to the outer shell surface of the flat goods (1) unwound from the roll (4).

6. Method according to one of the preceding claims, **characterised in that** the determination is conducted within a detection region with two boundary lines arranged at a predeterminable distance from one another and oriented parallel to the rotational axis.

7. Method according to one of the preceding claims, **characterised in that** a predeterminable proportion of the run-off edge (2) is detected within the detection region with the optical detector (3) and used as evaluation criterion.

8. Method according to one of the preceding claims, **characterised in that** the position of the detection region is changed in dependence on the outside diameter of the wound-up flat goods (1) and adapted thereto.

9. Method according to one of the preceding claims, that an optical slit diaphragm, which is arranged between the run-off edge (2) and the optical detector (3), is used to predetermine the detection region.

10. Method according to one of the preceding claims, **characterised in that** the determination of the position and/or orientation of the run-off edge (2) is conducted sequentially over regions of the width of the unwound flat goods (1).

11. Method according to one of the preceding claims, **characterised in that** a longitudinal distortion of the flat goods (1) is determined taking into consideration the active web strength, the modulus of elasticity of the flat goods, the instantaneous outside diameter and the distance from a following return roll (5).

12. Method according to one of the preceding claims, **characterised in that** the position and/or orientation of the run-off edge (2) is determined by means of a projected optical image or the shadow of the run-off edge (2).

## Revendications

1. Procédé de détection de défauts de planéité lors du déroulement de produits plats et souples en forme de bandes à partir d'un rouleau sur lequel ce produit est maintenu sous forme enroulée, selon lequel, on détermine, lors du déroulement à l'aide d'au moins un détecteur optique (3), et sur au moins une zone de la largeur du produit plat (1), la position et/ou l'orientation du bord de sortie (2) formé par rapport à un plan dirigé parallèlement à l'axe de rotation du rouleau (4).

2. Procédé conforme à la revendication 1,
**caractérisé en ce que**
la position et/ou l'orientation du bord de sortie est déterminée simultanément sur la totalité de la largeur du produit plat (1).

3. Procédé conforme à la revendication 1 ou 2,
**caractérisé en ce que**
la position et/ou l'orientation du bord de sortie est déterminée en utilisant entant que détecteur optique (3) une rangée de capteurs à transfert de charge, CCD, une matrice de capteurs à transfert de charge ou une vidéo caméra.

4. Procédé conforme à l'une des revendications précédentes,
**caractérisé en ce que**
le nombre d'éléments de détection du détecteur optique (3) qui saisissent une valeur de seuil pouvant être prédéfinie de l'intensité détectée est recherché pour déterminer l'orientation du bord de sortie.

5. Procédé conforme à l'une des revendications précédentes,
**caractérisé en ce que**
la détection est mise en oeuvre à l'aide d'un ou de plusieurs détecteurs (3) qui est ou sont disposé(s) perpendiculairement à la surface enveloppe externe du produit (1) plat déroulé du rouleau (4).

6. Procédé conforme à l'une des revendications précédentes,
**caractérisé en ce que**
la détermination est mise en oeuvre à l'intérieure d'une zone ou d'une plage de détection composant deux lignes de limitation situées à une distance prédéfinie l'une de l'autre et dirigées parallèlement à l'axe de rotation.

7. Procédé conforme à l'une des revendications précédentes,
**caractérisé en ce qu'**
avec le détecteur optique (3) on détecte une partie prédéfinie du bord de sortie dans la zone de détection et on l'utilise en tant que critère d'évaluation.

8. Procédé conforme à l'une des revendications précédentes,
**caractérisé en ce que**
la position de la zone de détection est modifiée en fonction du diamètre externe défini par le produit plat (1) enroulé et est adaptée à ce diamètre.

9. Procédé conforme à l'une des revendications précédentes,
**caractérisé en ce que**
pour prédéfinir la zone de détection on utilise un diaphragme à fente monté entre le bord de sortie (2) et le détecteur optique (3).

10. Procédé conforme à l'une des revendications précédentes,
**caractérisé en ce que**
la détermination de la position et/ou de l'orientation du bord de sortie (2) est effectuée séquentiellement sur des zones de la largeur du produit plat déroulé.

11. Procédé conforme à l'une des revendications précédentes,
**caractérisé en ce que**
l'étirage longitudinal du produit plat (1) est déterminé en prenant en considération la force active de la bande, le module E du produit plat, le diamètre extérieur instantané et la distance par rapport à un rouleau de renvoi (5) monté en aval.

12. Procédé conforme à l'une des revendications précédentes,
**caractérisé en ce que**
la position et/ou l'orientation du bord de sortie (2) est déterminée au moyen d'une image optique projetée ou de l'ombre de ce bord de sortie (2).
